(19) Europäisches Patentamt
European Patent Office
Office européen des brevets

(11) Veröffentlichungsnummer: **0 236 862 B1**

# (12) EUROPÄISCHE PATENTSCHRIFT

(45) Veröffentlichungstag der Patentschrift: **15.01.92**

(51) Int. Cl.5: **C08G 63/02**, C08G 64/20

(21) Anmeldenummer: **87102701.7**

(22) Anmeldetag: **25.02.87**

## (54) Verfahren zur Herstellung von linearen aliphatischen Homo-Polycarbonaten.

(30) Priorität: **07.03.86 DE 3607625**

(43) Veröffentlichungstag der Anmeldung:
**16.09.87 Patentblatt 87/38**

(45) Bekanntmachung des Hinweises auf die Patenterteilung:
**15.01.92 Patentblatt 92/03**

(84) Benannte Vertragsstaaten:
**DE FR GB IT**

(56) Entgegenhaltungen:
**DE-A- 1 545 116**
**FR-A- 2 206 342**
**FR-A- 2 352 834**

**DIE MAKROMOLEKULARE CHEMIE, Band 187, Nr. 11, November 1986, Seiten 2579-2589, Basel, CH; H. KEUL et al.: "Anionic ring-opening polymerization of 2,2-dimethyltrimethylene carbonate"**

**PATENT ABSTRACTS OF JAPAN, Band 4, Nr. 124 (C-23)[606], 2. September, Seite 47 C 23; & JP-A-55 78 019 (ADEKA ARGUS KAGAKU K.K.) 12-06-1980**

(73) Patentinhaber: **BAYER AG**
**W-5090 Leverkusen 1 Bayerwerk(DE)**

(72) Erfinder: **Leitz, Edgar**
**Goethestrasse 63**
**W-4047 Dormagen 1(DE)**
Erfinder: **Lindner, Christian, Dr.**
**Riehler Strasse 200**
**W-5000 Koeln 60(DE)**
Erfinder: **Eichenauer, Herbert, Dr.**
**Goethestrasse 71**
**W-4047 Dormagen 1(DE)**
Erfinder: **Ott, Karl-Heinz, Dr.**
**Paul-Klee-Strasse 54**
**W-5090 Leverkusen(DE)**
Erfinder: **Buysch, Hans-Josef, Dr.**
**Brandenburger Strasse 28**
**W-4150 Krefeld(DE)**
Erfinder: **Mues, Peter, Dr.**
**Weiers Hecke 30**
**W-4100 Duisburg 46(DE)**
Erfinder: **Höcker, Hartwig, Prof. Dr.**
**Soerser Winkel 20**
**W-5100 Aachen(DE)**
Erfinder: **Keul, Helmut, Dr.**
**Kochstrasse 3**
**W-7500 Karlsruhe 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Gegenstand der vorliegenden Erfindung ist ein Polymerisationsverfahren zur Herstellung von Homopolymerisaten aus cyclischen aliphatischen Carbonaten in Gegenwart von aprotischen organischen Lösungsmitteln.

In den DE-OS 1 545 116, 1 545 117 wird die Polymerisation von cyclischen, aliphatischen Carbonaten unter Verwendung von metallorganischen Verbindungen als Katalysatoren beschrieben. Als bevorzugtes Verfahren wird dabei eine Massepolymerisation bei Temperaturen vorzugsweise im Bereich von ca. 90° C durchgeführt.

DE-OS 3 103 135 und DE-OS 3 204 078 schreiben die Verwendung von alkalisch reagierenden Thaliumverbindungen als Katalysatoren zur Polymerisation cyclischer Carbonate vor.

Die vorliegende Erfindung betrifft ein Verfahren zur Herstellung von linearen aliphatischen Polycarbonaten aus cyclischen aliphatischen Carbonaten mit folgenden Merkmalen:

1. Die Polymerisation wird im Sinne einer "lebenden" anionischen Polymerisation in Gegenwart von aprotischen organischen Lösungsmitteln unter Verwendung von metallorganischen Verbindungen der Elemente der 1. Hauptgruppe des Periodensystems als Initiatoren durchgeführt.
2. Das Monomer/Lösungsmittel-Gewichtsverhältnis liegt im Bereich von 1 bis 50:100, vorzugsweise 5 bis 20:100, besonders bevorzugt 7 bis 12:100.

Eine bevorzugte Ausführungsform des erfindungsgemäßen Verfahrens ist dadurch gekennzeichnet, daß

1. als Initiatoren lithiumorganische Verbindungen, vorzugsweise n-Butyl-lithium und sec.-Butyl-lithium, Verwendung finden,
2. als aprotische organische Lösungsmittel aromatische oder aliphatische Kohlenwasserstoffe oder cyclische Ether, vorzugsweise Toluol oder Tetrahydrofuran, eingesetzt werden,
3. das Monomer/Lösungsmittel-Gewichtsverhältnis 7 bis 12 zu 100 beträgt,
4. die Polymerisation in einem Temperaturbereich von -50° C bis 0° C durchgeführt wird und
5. die Polymerisation in inerter Atmosphäre (Argon, Stickstoff) und unter Ausschluß von Luftsauerstoff und Luftfeuchtigkeit durchgeführt wird.

Eine weitere bevorzugte Ausführungsform zeichnet sich dadurch aus, daß

1. die Polymerisationstemperatur unterhalb der Ceiling-Temperatur des Polymeren, vorzugsweise im bereich von -50° C bis 0° C liegt,
2. der Zusatz von Agentien zur Desaktivierung der polymerisationsreaktiven Zentren nach vollständigem Umsatz und vor dem Einsetzen von Nebenreaktionen z.B. "back-biting"-Reaktionen erfolgt, wobei der Desaktivator vorzugsweise im molarem Überschuß einzubringen ist und
3. sich die Molmasse des Polymeren über das Initiator/Monomer-Verhältnis einstellen läßt.

Nach dem erfindungsgemäßen Verfahren werden cyclische aliphatische Carbonate in aprotischen organischen Lösungsmitteln im Sinne einer "lebenden" anionischen Polymerisation polymerisiert.

Die Polymerisation wird in inerter Atmosphäre (Argon, Stickstoff) und in Abwesenheit von Luftsauerstoff und Luftfeuchtigkeit durchgeführt.

Cyclische aliphatische Carbonate im Sinne der Erfindung sind Verbindung der Formel (I)

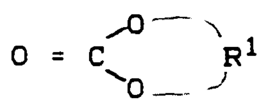

(I)

worin

$R^1$ $-(CH_2)_n-$ mit n = 3-6,
$-CH_2CH_2CH(CH_3)-$,
$-CH_2CH_2OCH_2CH_2OCH_2CH_2-$

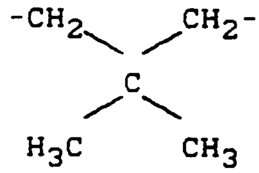

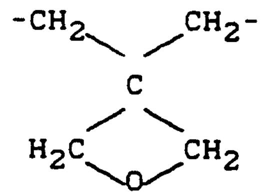

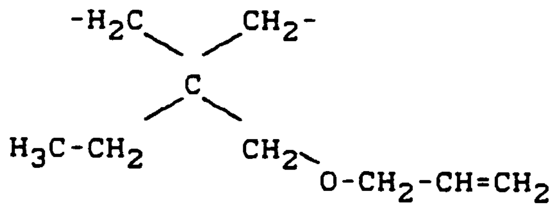

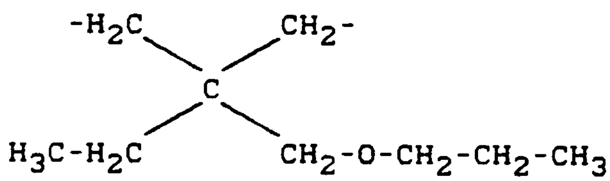

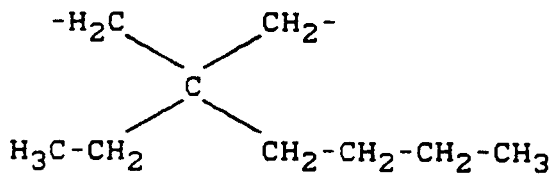

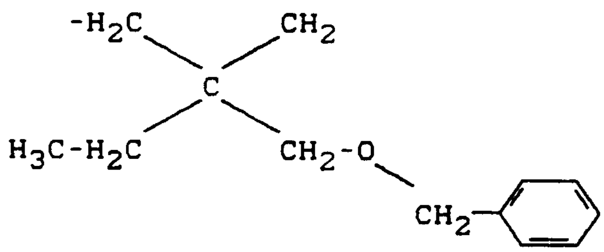

bedeutet und
der Formel (II)

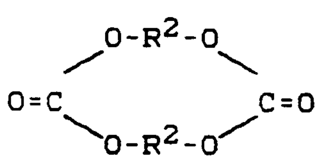

(II)

worin

$R^2$ $-(CH_2)_n-$ mit n = 4-12
$-CH_2CH_2OCH_2CH_2-$
$-CH_2CH_2OCH_2CH_2OCH_2CH_2-$

bedeutet.

Bevorzugt werden Carbonate der Formel (I) verwendet. Besonders bevorzugt ist das Carbonat der

Formel

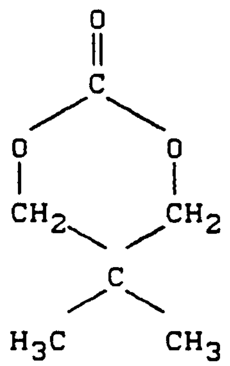

(III)

Initiatoren im Sinne der Erfindung sind metallorganische Verbindungen der Alkalimetalle mit der allgemeinen Formel $MR^3$.

M bezeichnet das Alkalimetall, (Lithium, Natrium, Kalium) $R^3$ einen einwertigen Kohlenwasserstoffrest, der aliphatischer, aromatischer oder alicyclischer Natur sein kann. Bevorzugtes Alkalimetall ist Lithium.

Bevorzugte Initiatoren sind n-Butyllithium und sec.-Butyllithium.

Als aprotische Lösungsmittel im Sinne der Erfindung werden aromatische und aliphatische Kohlenwasserstoffe wie Benzol, Toluol, Xylol, Pentan, Hexan, Cycloheptan verwendet.

Geeignete Lösungsmittel sind auch cyclische Ether wie Tetrahydrofuran, Tetrahydropyran oder Mischungen aus aromatischen (aliphatischen) Kohlenwasserstoffen und cyclischen Ethern. Bevorzugte Lösungsmittel sind Toluol und Tetrahydrofuran.

Bei der Polymerisation werden bevorzugt 1-50 Gew.-Tle., besonders bevorzugt 5-20 Gew.-Tle. und insbesondere 7-12 Gew.-Tle. Carbonat pro 100 Gew.-Tle. Lösungsmittel eingesetzt.

Die Polymerisation im Sinne der Erfindung kann bei Temperaturen von -100° C bis 0° C durchgeführt werden, bevorzugt bei -50° C bis 0° C.

Desaktivatoren im Sinne der Erfindung sind protische Verbindungen wie z.B. Wasser, Alkohole, Säuren oder Gemische daraus.

Weitere Desaktivatoren sind elektrophile, aprotische Verbindungen wie Alkyl- bzw. Arylhalogenide (insbesondere Methylchlorid, Methyliodid, Benzylchlorid), Carbonsäurechoride (insbesonders Benzoylchorid, Acetylchlorid, Chlorameisensäureester), Carbonsäureanhydride (insbesondere Acetanhydrid) und Carbonsäureester (insbesondere aktivierte Ester, wie z.B. Carbonsäurephenylester, Carbonsäurenitrophenylester). Die Desaktivatoren werden vorzugsweise in gelöster Form zugesetzt.

Bevorzugte Desaktivatoren sind Methanol/Salzsäure-Mischungen, Methyliodid, Benzylchlorid und Chlorameisensäureester.

Die linearen aliphatischen Polymeren lassen sich nach bekannten Verfahren isolieren, z.B. durch Ausfällen mit Alkoholen, Filtrieren und anschließende Trocknung oder durch direktes Eindampfen der Polymerlösung in Ausdampfaggregaten, z.B. Schneckenextrudern und Dünnschichtverdampfern.

Das erfindungsgemäße Verfahren zur Polymerisation von cyclischen aliphatischen Carbonaten führt zu Polymeren mit linearem Aufbau, wobei die wiederkehrende Einheit die Formel [-CO-O-R-O-] besitzt, wobei R durch das monomere Carbonat vorgegeben ist und den Resten $R^1$ und $R^2$ entspricht.

Die Molmassen der Polycarbonate lassen sich über weite Bereiche variieren. Über die dem Fachmann bekannte "Molmasse-Initiator-Monomer-Umsatz-Beziehung" ist es möglich, gezielt Polycarbonate mit ganz bestimmten Molmassen aufzubauen.

Bedingt durch den "lebenden" Charakter des Polymeren wird nach vollständigem Umsatz des Monomeren durch erneute Monomerzugabe die Polymerisation wieder in Gang gesetzt und die Molmasse weiter erhöht bis zu einer Grenze, die sich aus der oben angegebenen Beziehung ergibt.

Die Molmasse der linearen aliphatischen Polycarbonate können 2 kg/mol bis 500 kg/mol vorzugsweise 20 kg/mol bis 120 kg/mol betragen, d.h. die Molekulargewichte sind etwa 2000 - 500000, bevorzugt 20000 - 120000.

Überraschenderweise wird die Thermostabilität der erfindungsgemäß hergestellten Polymere wesentlich vom Desaktivator bestimmt. Während die mittels Protonen desaktivierten Polymeren bereits bei ca. 270° C molekularen Abbau zeigen, sind die Polymeren, die durch elektrophile, aprotische Verbindungen, vorzugsweise Methyliodid oder Dimethylsulfat desaktiviert werden bis ca. 300° C ausreichend thermisch stabil.

Die linearen aliphatischen Polycarbonate zeigen thermoplastische Eigenschaften und lassen sich nach bekannten Verfahren verarbeiten. Sie lassen sich in bekannter Weise stabilisieren, pigmentieren, antistatisch oder flammwidrig ausrüsten oder mit Füllstoffen füllen.

Die in den folgenden Beispielen angebenen Zersetzungstemperaturen wurden durch Thermogravimetrie mit einer elektronischen Waage. Typ Ugine Eyrand Modell B70 (Fa. Setaram, Frankreich) ermittelt.

Beispiel 1

Zu einer Lösung von 15 g Neopentylglykolcarbonat in 150 ml Toluol wurden bei -10 °C 0,31 ml sec.-Butyllithium (1,4 molare Lösung in Cyclohexan) unter Stickstoff gegeben. Die Polymerisationszeit betrug bei dieser Temperatur 60 min. Das Reaktionsgemisch wurde dann durch Zugabe von 10 ml Methanol/Salzsäure (Gewichtsverhältnis 9:1) zerlegt und gefällt und dann durch Filtrieren isoliert.
$\overline{M}_w$ (aus Lichtstreuung): 36 000 g/mol
Zersetzungstemperatur: 275 °C.

Beispiel 2

Zu einer Lösung von 22 g Neopentylglykolcarbonat in 300 ml Toluol wurden bei -10 °C 0,16 ml sec.-Butyllithium (1,4 molare Lösung in Cyclohexan) unter Stickstoff zugegeben. Die Polymerisationszeit betrug bei dieser Temperatur 60 min. Das Reaktionsgemisch wurde wie in Beispiel 1 aufgearbeitet.
$\overline{M}_w$ (aus Lichtstreuung): 105 000 g/mol
Zersetzungstemperaturen: 280 °C.

Beispiel 3

Zur einer Lösung von 15 g Trimethylolpropanmonoallylethercarbonat in 150 ml Toluol wurden bei -10 °C 0,15 ml sec.-Butyllithium (1,4 molare Lösung in Cyclohexan) unter Stickstoff zugegeben. Die Polymerisationszeit betrug bei dieser Temperatur 60 min.

Zersetzung des Reaktionsgemisches erfolgte mit Methyliodid. Das Reaktionsprodukt wurde durch Verdampfen des Lösungsmittels isoliert und unter Stickstoff in Gegenwart von Stabilisatoren aufbewahrt.
$\overline{M}_w$ (aus Lichtstreuung): 78 000 g/mol.

Beispiel 4

Zu einer Lösung von 15 g Neopentylglykolcarbonat in 150 ml Toluol wurden bei -10 °C 0,5 ml sec.-Butyllithium (1,4 molare unter Lösung in Cyclhexan) unter Stickstoff zugegeben. Die Reaktionszeit betrug bei dieser Temperatur 60 min. Die Desaktivierung des Polymeren erfolgte durch Methyliodid. Das Reaktionsprodukt wurde durch Fällung isoliert.
$\overline{M}_w$ aus Lichtstreuung): 23 000 g/mol
Zersetzungstemperatur: 305 °C.

Beispiel 5

Zu einer Lösung von 15 g Neopentylglykolcarbonat in 150 ml THF wurden bei -30 °C 0,15 ml sec.-Butyllithium (1,4 molare Lösung in Cyclohexan) unter Stickstoff zugegeben. Die Reaktionszeit bei der genannten Temperatur betrug 30 min. Das Reaktionsgemisch wurde wie in Beispiel 1 aufgearbeitet.
$\overline{M}_w$ (aus Lichtstreuung): 87 000 g/mol
Zersetzungstemperatur: 280 °C.

Beispiel 6 (Vergleichversuch)

Zu einer Lösung von 15 g Neopentylglykolcarbonat in 150 ml Toluol wurden bei +40 °C 0,30 ml sec.-Butyllithium (1,4 molare Lösung in Cyclohexan) zugegeben. Die Reaktionszeit betrug bei der angegebenen Temperatur 60 min. Da die Reaktion oberhalb der Ceiling-Temperatur von Poly-neopentylglykolcarbonat lag, konnte kein Polymeres isoliert werden.

**Patentansprüche**

1. Verfahren zur Herstellung von thermoplastischen linearen aliphatischen Homo-Polycarbonaten, dadurch gekennzeichnet, daß man cyclische aliphatische Carbonate der allgemeinen Formel (I)

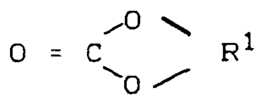 (I)

worin

$R^1$ $-(CH_2)_n-$ mit n = 3-6,
$-CH_2CH_2CH(CH_3)-$,
$-CH_2CH_2OCH_2CH_2OCH_2CH_2-$

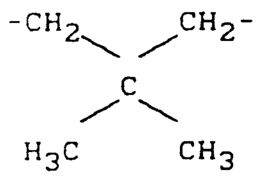

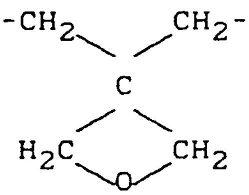

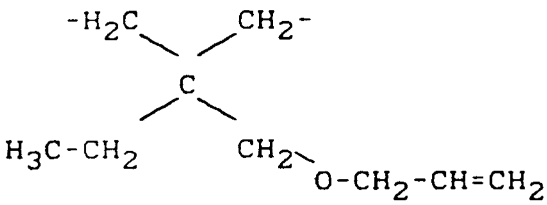

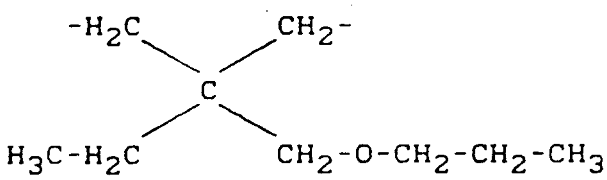

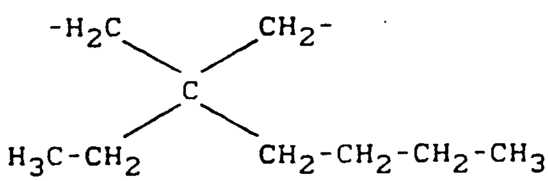

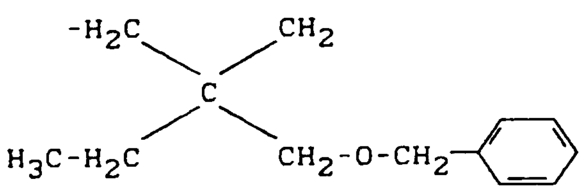

oder der allgemeinen Formel (II)

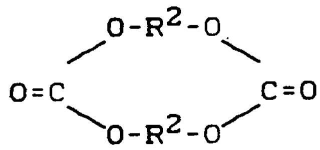 (II)

mit $R^2$ = $(CH_2)_n$, $-CH_2CH_2OCH_2CH_2-$, $-CH_2CH_2OCH_2CH_2OCH_2CH_2-$

mit n = 4-12

in Gegenwart von aprotischen organischen Lösungsmitteln unter Ausschluß von Luftsauerstoff und Luftfeuchtigkeit polymerisiert, wobei metallorganische Verbindungen der Elemente der 1. Hauptgruppe des Periodensystems als Initiatoren verwendet werden, das Monomer/Lösungsmittel-Verhältnis im Bereich von 1 Gew.-Teil bis 50 Gew.-Teile Monomer pro 100 Gew.-Teile Lösungsmittel liegt und die Polymerisationstemperatur zwischen -100° C und 0° C liegt.

**2.** Verfahren nach Anspruch 1, dadurch gekennzeichnet, daß das Monomer/Lösungsmittel-Gewichtsverhältnis 5 Gew.-Teile bis 20 Gew.-Teile Monomer pro 100 Gew.-Teile Lösungsmittel beträgt und die Polymerisationstemperatur im Bereich von -50° C bis 0° C liegt.

**3.** Verfahren nach Anspruch 1, dadurch gekennzeichnet, daß als cyclisches aliphatisches Carbonat

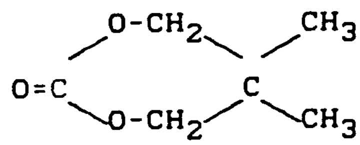

eingesetzt wird.

**4.** Verfahren nach Ansprüche 1 bis 3, dadurch gekennzeichnet, daß die Desaktivierung des lebenden Polymeren mit einer elektrophilen aprotischen Verbindung ausgewählt aus Alkylhalogenid, Carbonsäurechlorid, Carbonsäureanhydrid, Carbonsäureester oder Mischungen daraus erfolgt.

## Claims

**1.** A process for the production of thermoplastic, linear, aliphatic homopolycarbonates, characterized in that cyclic aliphatic carbonates corresponding to general formula (I)

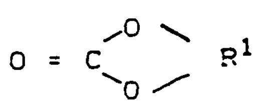 (I)

in which

$R^1$ $-(CH_2)_n-$ with n = 3-6,
$-CH_2CH_2CH(CH_3)-$,
$-CH_2CH_2OCH_2CH_2OCH_2CH_2-$

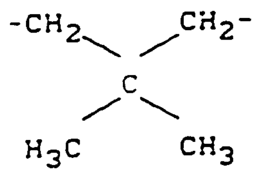

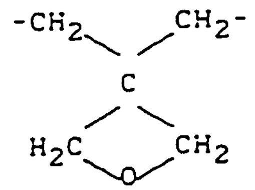

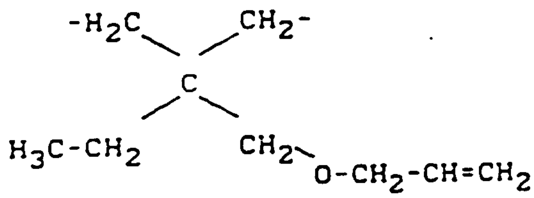

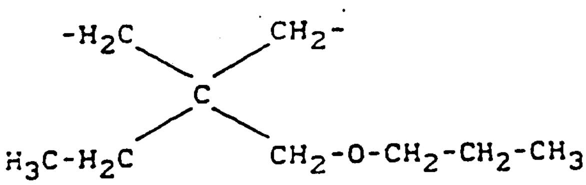

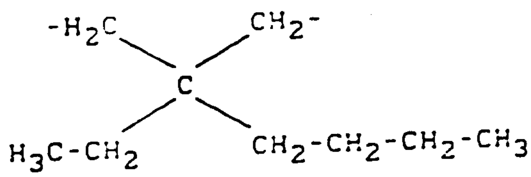

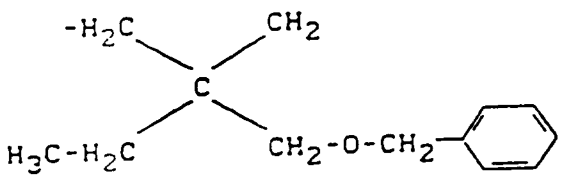

or to general formula (II)

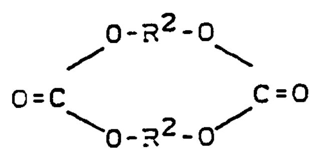

(II)

in which

$R^2$ = $(CH_2)_n$, $-CH_2CH_2OCH_2CH_2-$, $-CH_2CH_2OCH_2CH_2OCH_2CH_2-$ and

n = 4 - 12,

are polymerized in the presence of aprotic organic solvents in the absence of atmospheric oxygen and moisture, organometallic compounds of the elements of the 1st main group of the periodic system being used as initiators, the monomer-to-solvent ratio being in the range from 1 part by weight to 50 parts by weight monomer per 100 parts by weight solvent and the polymerization temperature being between -100°C and 0°C.

2. A process as claimed in claim 1, characterized in that the monomer to solvent ratio by weight is 5 parts by weight to 20 parts by weight monomer per 100 parts by weight solvent and the polymerization temperature is in the range from -50 ° C to 0 ° C.

3. A process as claimed in claim 1, characterized in that

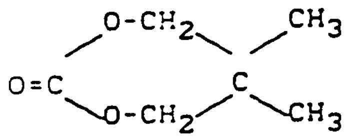

is used as the cyclic aliphatic carbonate.

4. A process as claimed in claims 1 to 3, characterized in that the living polymer is deactivated with an electrophilic aprotic compound selected from alkyl halide, carboxylic acid chloride, carboxylic anhydride, carboxylic acid ester or mixtures thereof.

## Revendications

1. Procédé de production d'homopolycarbonates aliphatiques linéaires thermoplastiques, caractérisé en ce qu'on polymérise des carbonates aliphatiques cycliques de formule générale (I)

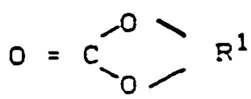

(I)

dans laquelle

$R^1$ représente

$-(CH_2)_n-$ avec n = 3-6,

$-CH_2CH_2CH(CH_3)-$,

$-CH_2CH_2OCH_2CH_2OCH_2CH_2-$

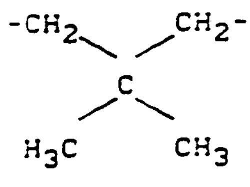

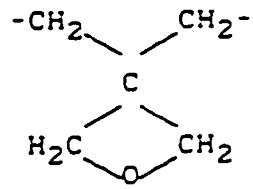

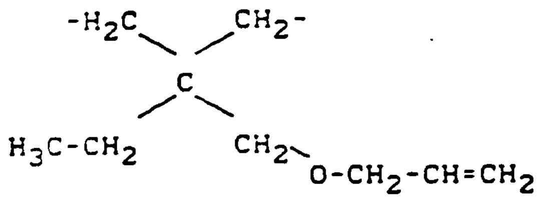

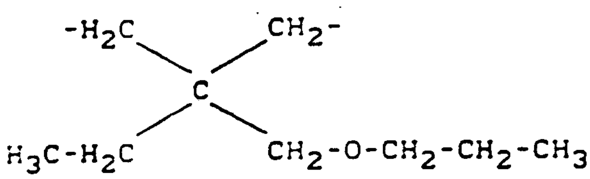

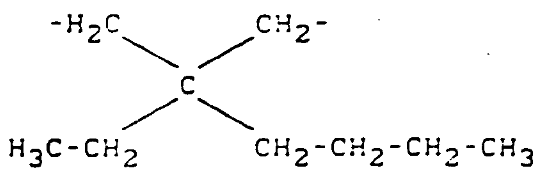

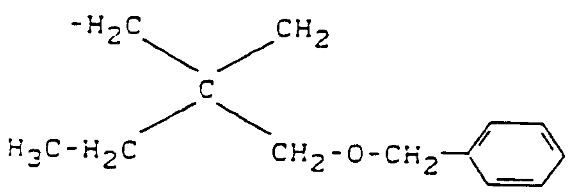

ou de formule générale (II)

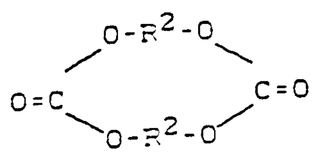

(II)

avec $R^2$ = $(CH_2)_n$, $-CH_2CH_2OCH_2CH_2-$, $-CH_2CH_2OCH_2CH_2OCH_2CH_2-$

où n = 4-12
en présence de solvants organiques aprotiques à l'abri de l'oxygène de l'air et de l'humidité de l'air, en utilisant comme initiateurs des composés organométalliques des éléments du premier groupe principal du système périodique, le rapport monomère/solvant se situant dans la plage de 1 à 50 parties en poids de monomère pour 100 parties en poids de solvant et la température de polymérisation étant comprise entre -100 °C et 0 °C.

2. Procédé suivant la revendication 1, caractérisé en ce que le rapport en poids du monomère au solvant va de 5 à 20 parties en poids de monomère pour 100 parties en poids de solvant et la température de polymérisation se situe dans la plage de -50 ° C à 0 ° C.

3. Procédé suivant la revendication 1, caractérisé en ce qu'on utilise comme carbonate aliphatique cyclique le composé

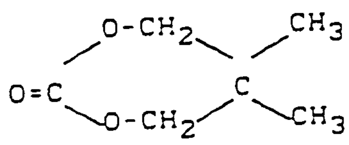

4. Procédé suivant les revendications 1 à 3, caractérisé en ce que la désactivation du polymère vivant est effectuée avec un composé aprotique électrophile choisi entre un halogénure d'alkyle, un chlorure d'acide carboxylique, un anhydride d'acide carboxylique, un ester d'acide carboxylique ou des mélanges de ces composés.